Europäisches Patentamt

European Patent Office

Office européen des brevets

(19)

(11) **EP 1 023 762 B1**

(12) **EUROPEAN PATENT SPECIFICATION**

(45) Date of publication and mention
of the grant of the patent:
**11.12.2002 Bulletin 2002/50**

(51) Int Cl.$^7$: **H02K 41/02**

(21) Application number: **98947658.5**

(86) International application number:
**PCT/GB98/03070**

(22) Date of filing: **14.10.1998**

(87) International publication number:
**WO 99/019971 (22.04.1999 Gazette 1999/16)**

(54) **THREE-DEGREES-OF-FREEDOM MOTOR**

DREI FREIHEITSGRADEN MOTOR

MOTEUR A TROIS DEGRES DE LIBERTE

(84) Designated Contracting States:
**AT BE CH DE ES FR GB IE IT LI NL SE**

(30) Priority: **15.10.1997 GB 9721805**

(43) Date of publication of application:
**02.08.2000 Bulletin 2000/31**

(73) Proprietor: **THE UNIVERSITY OF SHEFFIELD**
**Sheffield, South Yorkshire S10 2TN (GB)**

(72) Inventors:
• **HOWE, David**
  **Bamford, Hope Valley S33 0AU (GB)**
• **WANG, Jiabin**
  **Chelmsfield CM2 6SF (GB)**
• **JEWELL, Geraint**
  **Hathersage, Sheffield S30 1DA (GB)**

(74) Representative: **Lunt, Mark George Francis et al**
**Harrison Goddard Foote,**
**Fountain Precinct,**
**Leopold Street**
**Sheffield S1 2QD (GB)**

(56) References cited:
**EP-A- 0 421 029**          **DE-C- 4 441 208**
**US-A- 5 410 232**

• **E ADRESEN ET M ANDERS: "On the inductance and force calculation of a three axes torque motor" COMPEL - THE INTERNATIONAL JOURNAL FOR COMPUTATION AND MATHEMATICS IN ELECTRICAL AND ELECTRONICS ENGINEERING, vol. 14, no. 1, 1 March 1995, pages 233-237, XP002090152**
• **WANG J ET AL: "ANALYSIS OF A SPHERICAL PERMANENT MAGNET ACTUATOR" JOURNAL OF APPLIED PHYSICS, vol. 81, no. 8, PART 02A, 15 April 1997, pages 4266-4268, XP000702763**
• **WANG J ET AL: "MODELLING OF A NOVEL SPHERICAL PERMANENT MAGNET ACTUATOR" 20 April 1997 , PROCEEDINGS OF THE 1997 IEEE INTERNATIONAL CONFERENCE ON ROBOTICS A AUTOMATION, ALBUQUERQUE, APR. 20 - 25, 1997, VOL. VOL. 2, NR. CONF. 14, PAGE(S) 1190 - 1195 , INSTITUTE OF ELECTRICAL AND ELECTRONICS ENGINEERS XP000774351 cited in the application see the whole document**

**EP 1 023 762 B1**

**Description**

The present invention relates to a motor having three degrees of freedom of movement, and to various devices including such a motor.

There is a growing need for programmable servo-controlled high-speed actuation in multiple axes, for applications as diverse as robotic manipulators, infrared and laser tracking systems, automated manufacturing, remote camera manipulation, and joysticks with force feedback. At present, multi-degree of freedom motions are realised almost exclusively by using a separate motor/actuator for each axis, which results in a relatively complicated and heavy transmission system. This inevitably compromises the dynamic performance and servo-tracking accuracy of the arrangement, due to the combined effects of inertia, backlash, non-linear friction, and elastic deformation of gears. Actuators with multiple degrees of freedom should alleviate these problems, whilst being lighter and more efficient. However, although they have been the subject of research for several decades, and numerous concepts have been proposed (see references [1] - [4]), their application potential has not been realised, probably due to the complexity of their structure and related difficulties in modelling their electro-magnetic behaviour and optimising their design.

A spherical actuator which is capable of two degrees of freedom has been described, systematically analysed and experimentally demonstrated in references[5] and [6]. These last two references describe a motor comprising a permanent magnet spherical rotor mounted for rotation about two orthogonal axes in a stator comprising coils adapted to induce magnetic fields through the rotor to rotate the rotor. The rotor comprises a diametrically parallel-magnetised, two-pole magnet, and the stator coils are arranged in three pairs of interconnected coils in a cubic arrangement.

The rotor has a payload arm which extends through an aperture of the stator and on which a payload can be mounted. One application of such an actuator is the manipulation of a camera. While two degrees of freedom motors such as described in references [5] and [6] can point a camera in any desired direction, it cannot rotate the camera to ensure the camera is aligned with an horizon.

Therefore there is a need for a motor which not only enables pan and tilt of a rotor through about ±45°, but also permits rotation of the rotor about its axis. However, such a motor should be capable of modelling of its magnetic behaviour to enable effective and precise control of its movement and also optimisation of its design to meet different design criteria.

DE-C-4441208 discloses a motor having a spherical rotor shell between two stator shells, the rotor shell apparently having multi-pole permanent magnets so that rotation of the rotor relative to the stator is possible about three orthogonal axes. However, there is no suggestion of modelling the movement for control purposes. Moreover, moments of inertia of the rotor are large, due to unbalanced mass distribution, and this would substantially adversely affect its dynamic capability in servo applications. Indeed, the rotor requires a large space envelope and thus it suffers from low volumetric efficiency.

US-A-5410232 discloses a ball and socket variable reluctance motor having a multi-pole spherical rotor in a spherical multi-pole stator. However the arrangement therein is primarily concerned with position tracking using an optical system and grid pattern concentric with the rotor. There is no indication that the device develops three independently controllable torque components within its working envelope.

In accordance with the present invention, therefore, there is provided a motor comprising a permanent magnet spherical rotor mounted for rotation about three orthogonal axes in a stator comprising coils adapted to induce magnetic fields through the rotor to rotate the rotor, said rotor comprising a composite magnet having at least four segments of a sphere, each segment being magnetised so that the curved surface of the segment has substantially only one polarity, characterised in that the segments are parallel magnetised, and, in relation to that radius of curvature which bisects each segment both transversely and longitudinally of the segment, the magnetisation lies parallel to that radius.

The stator preferably comprises four sets of coils, each set preferably arranged as a pair of two electrically interconnected coils.

The stator preferably has an access aperture and the rotor has a payload arm extending through the aperture, which aperture permits substantially ±45° pan and tilt rotation of the rotor arm and unrestricted rotation of the rotor arm about its own axis.

In another aspect, the present invention provides a motor comprising a permanent magnet spherical rotor mounted for rotation about three orthogonal axis in a stator having an access aperture and comprising coils adapted to induce magnetic fields through the rotor to rotate the rotor, said rotor comprising a composite magnet having at least two pole pairs, characterised in that the sector coils comprise at least four rim coils arranged with their centres lying substantially on a rim plane parallel said aperture, and a corresponding number of base coils arranged with their centres on a base plane, parallel said rim plane and disposed remote from said aperture, opposing pairs of said rim and base coils being electrically interconnected.

Preferably the base coils are rotationally offset with respect to the rim coils.

Preferably there are only four segments and/or only four sets of coils.

Preferably the stator is surrounded by a spherical ferro-magnetic shell so as to increase magnetic coupling

2

between the respective fields.

The rotor may similarly have a hollow centre or an iron core, the segments being shaped accordingly.

In a further aspect, the present invention provides a motor comprising a permanent magnet spherical rotor mounted for rotation about three orthogonal axis in a stator comprising coils adapted to induce magnetic fields through the rotor to rotate the rotor, characterised in that the flux density created by the rotor in the regions of the coils is, in a spherical co-ordinate system, given by the following expressions:

$$B_{Ir} = \sum_{l=2,4,\ldots}^{\infty} \sum_{m=1,3,\ldots}^{l} C_{lm}(l+1)r^{-(l+2)}P_l^m(\cos\theta)\sin\alpha$$

$$B_{I\theta} = \sum_{l=2,4,\ldots}^{\infty} \sum_{m=1,3,\ldots}^{l} C_{lm}r^{-(l+2)}\frac{d}{d\theta}P_l^m(\cos\theta)\sin\alpha$$

$$B_{I\alpha} = \sum_{l=2,4,\ldots}^{\infty} \sum_{m=1,3,\ldots}^{l} \frac{mC_{lm}}{\sin\theta}r^{-(l+2)}P_l^m(\cos\theta)\cos\alpha$$

wherein:

$B_{I(\cdot)}$ is the magnetic flux density vector in Tesla for components r(radius, in metres) and $\theta$ and $\alpha$ (angles, in radians) of the spherical co-ordinate system; and
$P_l^m(\cdot)$ is the associated Legrendre polynomial of degree $l$ and order $m;$ and

where $C_{lm}$ is given by:

$$C_{lm} = -\mu_0 R_m^{l+2} M_{lm} /[(1 + l(1 + \mu_r)],$$

wherein

$\mu_0$ is the permeability of free space in Henrys per metre;
$\mu_r$ is the relative recoil permeability; and
$R_m$ is the rotor radius in metres; and

where $M_{lm}$ is given by:

$$M_{lm} = \frac{4(2l+1)(l-m)!}{\pi m(l+m)!} M_c \int_0^1 P_l^m(x)\,x\,dx \quad ;$$

and       where

$M_c$ is given by:
$M_c = B_{rem}/\mu_0\sqrt{2}$, wherein
$B_{rem}$ is the remanence in Tesla of the rotor material.

Preferably, the torque magnitude of the motor is optimised by arranging the coils so that the following expression is true:

$$T_m = 15\pi\sqrt{2}B_{rem}JR_m^4 \ln(R_s/R_0)(\sin^3 \delta_1 - \sin^3 \delta_0)/8(2\mu_r + 3),$$

wherein

$T_m$ is the torque magnitude in Newtons metres;
$B_{rem}$ is the remanence in Tesla of the rotor material;
$J$ is the current density vector in the winding region, in Amps per square metre;
$R_m$ is the rotor radius in metres;
$R_s$ is the stator outside radius in metres;
$R_o$ is the stator inside radius in metres;
$\delta$, and $\delta_o$ are the stator coil angles in radians; and
$\mu_r$ is the relative recoil permeability.

The invention also provides a robotic manipulator, an infrared or laser tracking system, a remote camera manipulation device, or a joystick with force feedback, comprising a motor as defined above.

The invention is further described hereinafter, by way of example, with reference to the accompanying drawings, in which:-

Figures 1a and 1b are perspective schematic views of a three degree of freedom spherical motor in accordance with the present invention, Figure 1a being a perspective view from one side, while Figure 1b is an underneath view of the motor;
Figures 2a and b are schematic representations of the rotor of the motor of Figure 1, showing the magnetisation pattern thereof;
Figure 3 is a schematic illustration of the coil windings of the motor of Figure 1;
Figure 4a shows the spherical co-ordinate system; while Figure 4b is a plot of torque against motor size ratios;
Figure 5 illustrates the winding distribution of one coil;
Figure 6 is a sensor arrangement for a two-degrees-of-freedom motor;
Figure 7 is a block diagram of a suitable closed-loop control system for a two-degrees-of-freedom motor;
Figure 8 is a schematic perspective view of the stator housing corresponding to Figure 1a;
Figure 9 is a view corresponding to Figure 1b of the stator housing shown in Figure 8;
Figure 10 is a view in the direction of arrow X in Figure 9; and
Figures 11a to e are different views of one-half of a stator housing, Figure 11a being a plan view, Figure 11b being a section on the line C-C in Figure 11a, Figure 11c being a section on the line D-D in Figure 11a, Figure 11d is a view in the direction of arrow D in Figure 11a and Figure 11e is a view in the direction of arrow E in Figure 11a.

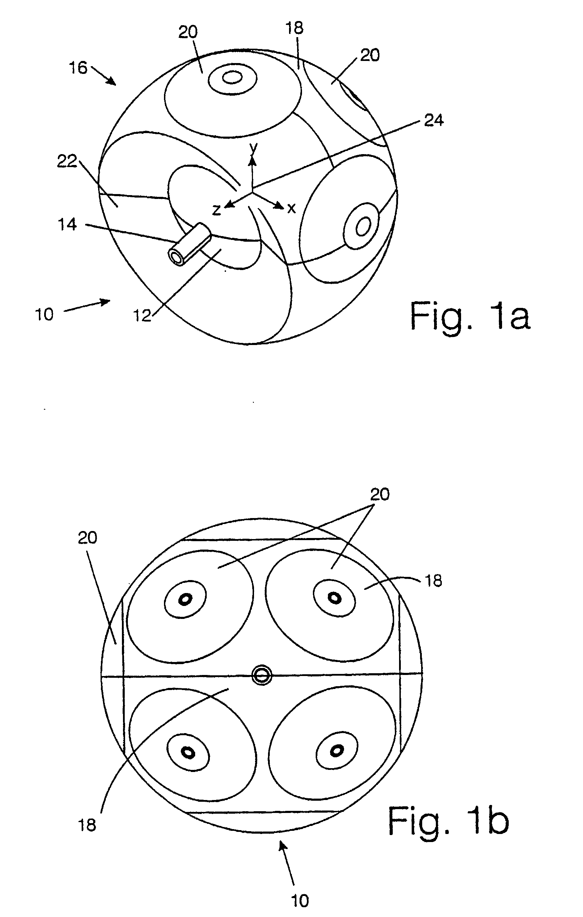

In the drawings, a spherical three-degrees-of-freedom of movement motor 10 is shown. The motor comprises a spherical rotor 12 having a payload arm 14. A stator 16 comprises a housing 18 and stator coils 20. The housing 18 has an aperture 22 through which the payload arm 14 extends. The motor 10 is adapted to move the payload arm through about ±45° panoramic movement in the *x-z* plane (indicated by the co-ordinate reference system 24 shown in Figure 1a), and a similar ±45° tilt movement in the *y-z* plane. In addition, the motor is arranged to rotate the payload arm 14 about its own axis.

Eight stator coils 20 are distributed over the surface of the stator 18, as seen in Figure 1b.

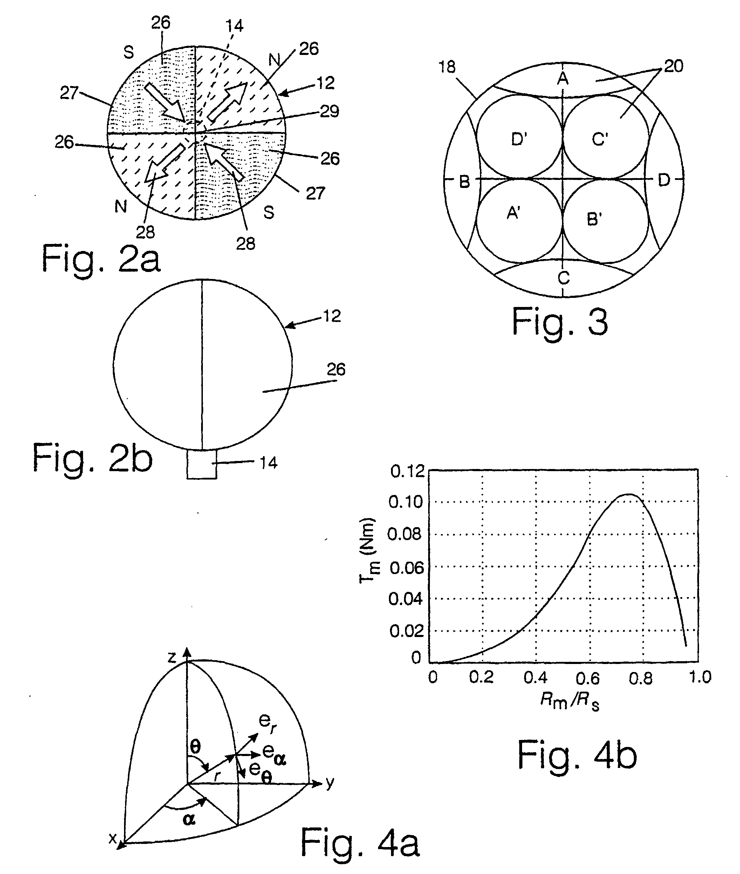

In Figure 2, the rotor 12 comprises four quarter spheres 26 bonded together to form the spherical rotor 12. The quarter spheres are parallel magnetised as indicated by the arrows 28 in Figure 2a so as to produce a rotor having four magnetic poles (indicated N and S) distributed around its circumference. The arrows 28 are parallel the radius of curvature of each segment, which radius bisects each segment. The straight edges 29 of each segment meet along a central line of the rotor.

Although not essential, it is preferred that the plane of the four magnetic poles (ie the plane of the rotor perpendicular to the straight edges 29) is arranged to lie in the plane containing the *x* axis as illustrated by the position of the payload arm in Figure 2. The composition of the rotor is not critical, but it may comprise NdFeB permanent magnet components bonded together. Moreover, the rotor may be hollow, solid or have an inner spherical iron core (not shown).

Turning to Figure 3, as mentioned above there are eight stator coils 20 which are arranged in pairs, A-A', B-B', C-C' and D-D'. Rim coils A, B, C and D are spaced around the periphery of the stator body 18 adjacent the aperture 22. Their centres are disposed on a rim plane, approximately equatorial with respect to the centre of rotation of the rotor 12. Base coils A', B', C' and D' have their centres likewise disposed on a base plane of the stator 18, parallel to the rim plane and aperture 22, although remote from the aperture with respect to the rim coils A, B, C and D. Moreover, the base coils A', B', C' and D' are rotationally offset with respect to the rim coils A, B, C and D so that the axis of the magnetic field established by any one coil pair passes through the rotor 12.

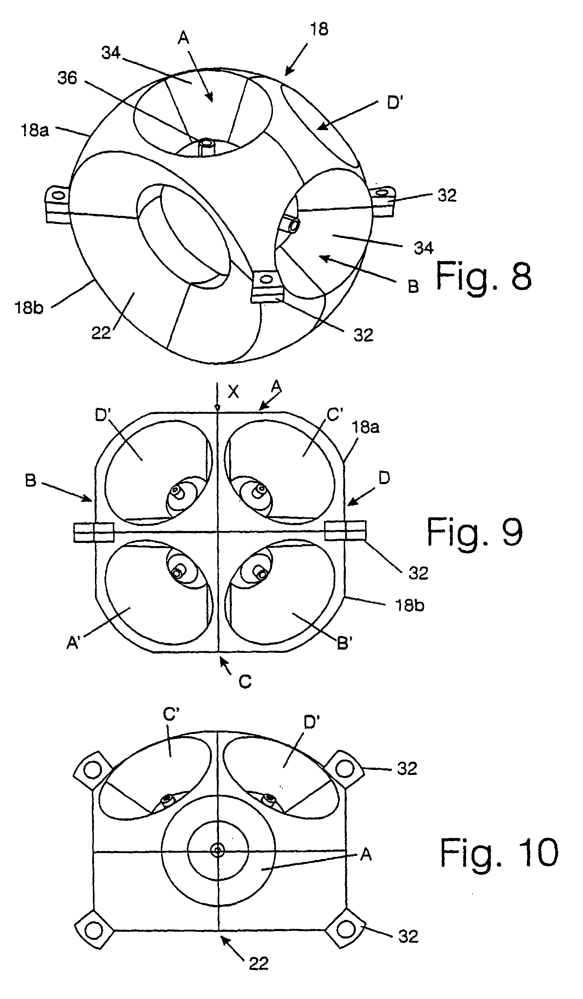

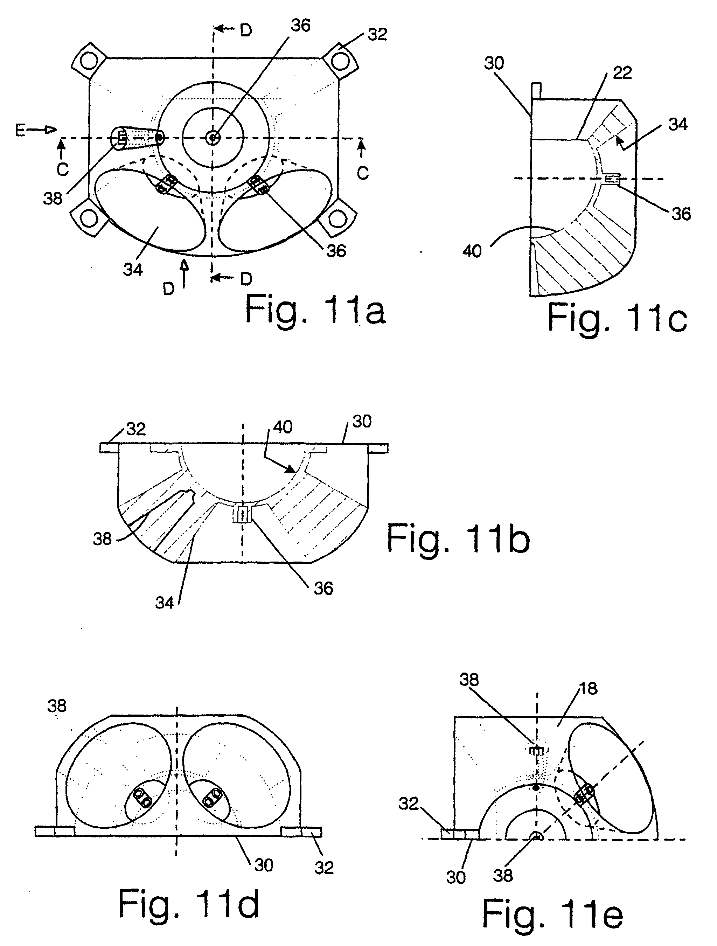

With reference to Figures 8 to 11, the stator body 18 comprises two halves, 18a, 18b having meeting faces 30 provided with connecting tags 32 by means of which the two halves, 18a, 18b, can be secured together.

Each coil 20 comprises a conical indentation 34 in the stator body 18 in order to receive a correspondingly shaped coil of wire (not shown). At the base of each indentation 34 is a spigot 36 adapted to receive a screw fastening, or the like to secure a coil (not shown) in position. Of the rim coils A, B, C, D, the indentation 34 for the coils A and C are formed completely in one stator body 18 a or b; whereas the indentations 34 for the coils B, D are formed between the facing surfaces 30 of adjacent stator halves A, B. On the other hand, the base coil indentations 34 for the coils A', B', C' and D' are formed two in each stator half 18a, b, as shown in Figure 9.

Although only two are shown, various bores 38 may be formed in the stator housing 18 for the insertion of Hall effect or like sensors (not shown) for detecting the position of the rotor 12 within the stator and providing feedback control.

The rotor 12 is received in a spherical surface 40 formed between the two halves, 18a, b of the stator. The stator body is moulded from a plastics material having a low friction surface so that the rotor is free to rotate within the confines of the stator without undue frictional resistance.

Thus by appropriate control of the excitation of the coil pairs in A-A', B-B', C-C' and D-D' the rotor can be urged to rotate about any of the $x$, $y$ or $z$ axes or some combined complex movement. Indeed, it is an important aspect of the present invention that the characteristics of the motor be successfully analysed so that appropriate control functions can be developed to maximise the motor's efficiency. Thus if torque is the prime requirement, then torque can be maximised by appropriate dimensioning of the various components according to the mathematical analysis of the motor system. Because the coil and magnet system is integrated and yet still produces three degrees of freedom of movement of the rotor relative to the stator, the complexity and hence the cost of the motor is minimised. Moreover, because of the compactness of the design, relatively high power to weight is achieved for a direct drive system. The in-built position sensing enables precise feedback control so that precise holding of position and the load can be achieved.

Indeed, since it is fundamental to the practicality of the motor of the present invention that it be capable of control, knowledge of the magnetic field distribution produced by the spherical permanent magnet rotor is essential to establish an accurate model of the motor/actuator 10, for design optimisation and dynamic modelling.

Without loss of generality, an air-cored actuator 10 is considered. Thus, the entire magnetic field region can be divided into two sub-regions, the outer airspace/ winding region in which the permeability is $\mu_0$ and the magnet region in which the permeability is $\mu_0, \mu_r$. Therefore:

$$\mathbf{B} = \begin{cases} \mu_0\mathbf{H} & \text{in the airspace/windings} \\ \mu_0\mu_r\mathbf{H} + \mu_0\mathbf{M} & \text{in the magnet} \end{cases} \quad (1)$$

where $\mu_r$ is the relative recoil permeability of the magnet and $\mathbf{M}$ is the remanent magnetisation. For a permanent magnet having a linear demagnetisation characteristic, $\mu_r$ is constant and $\mathbf{M}$ is related to the remanence, $\mathbf{B}_{rem}$, by $\mathbf{M} = \mathbf{B}_{rem}/\mu 0$. It is convenient to formulate the field distribution in terms of a scalar potential, $\varphi$ defined as $\mathbf{H} = -\nabla\varphi$, and the spherical co-ordinate system shown in Figure 4a. This leads to the following field equations:

$$\begin{cases} \nabla^2\varphi_I = 0 & \text{in the airspace/windings} \\ \nabla^2\varphi_{II} = \nabla \cdot \mathbf{M} / \mu_r & \text{in the magnet} \end{cases} \quad (2)$$

The components of the magnetisation vector $\mathbf{M}$ shown in Figure 2a may be expressed as:

$$\begin{cases} M_r = M_c\big[\operatorname{sgn}(\tan\theta)\sin\theta\sin\alpha + \operatorname{sgn}(\sin\alpha)\cos\theta\big] \\ M_\theta = M_c\big[\operatorname{sgn}(\tan\theta)\cos\theta\sin\alpha - \operatorname{sgn}(\sin\alpha)\sin\theta\big] \\ M_\alpha = M_c\big[\operatorname{sgn}(\tan\theta)\cos\alpha\big] \end{cases} \qquad (3)$$

where sgn($\cdot$) denotes the sign function and $M_c = B_{rem}/\mu_0\sqrt{2}$. It can be shown that $\nabla\cdot\mathbf{M}\equiv 0$. However, the contribution of the magnets will appear in the following interface boundary conditions:

$$\begin{cases} -\mu_r \left.\frac{\partial\varphi_{II}}{\partial r}\right|_{r=R_m} + M_r = -\left.\frac{\partial\varphi_I}{\partial r}\right|_{r=R_m} \\ -\frac{1}{r}\left.\frac{\partial\varphi_{II}}{\partial\theta}\right|_{r=R_m} = -\frac{1}{r}\left.\frac{\partial\varphi_I}{\partial\theta}\right|_{r=R_m} \\ -\frac{1}{r\sin\theta}\left.\frac{\partial\varphi_{II}}{\partial\alpha}\right|_{r=R_m} = -\frac{1}{r\sin\theta}\left.\frac{\partial\varphi_I}{\partial\alpha}\right|_{r=R_m} \end{cases} \qquad (4)$$

where $R_m$ is the radius of the spherical rotor. The radial component, $M_r$ may be expanded into spherical harmonics of the following form:

$$M_r = \sum_{l=2,4\ldots}^{\infty}\sum_{m=1,3,\ldots}^{l} M_{lm}\, P_l^m(\cos\theta)\sin\alpha \qquad (5)$$

where $P_l^m(\cdot)$ denotes the associated Legendre polynomial of degree $l$ and order $m$, and $M_{lm}$ is given by:

$$M_{lm} = \frac{4(2l+1)(l-m)!}{\pi m(l+m)!} M_c \int_0^1 P_l^m(x)\,x\,dx \qquad (6)$$

Solving for equation (2) with the boundary conditions of equation (4) yields the following expressions for the flux density distribution in the airspace/winding region:

$$\begin{aligned} B_{Ir} &= \sum_{l=2,4,\ldots}^{\infty}\sum_{m=1,3,\ldots}^{l} C_{lm}(l+1)r^{-(l+2)}P_l^m(\cos\theta)\sin\alpha \\[2mm] B_{I\theta} &= \sum_{l=2,4,\ldots}^{\infty}\sum_{m=1,3,\ldots}^{l} C_{lm}r^{-(l+2)}\frac{d}{d\theta}P_l^m(\cos\theta)\sin\alpha \\[2mm] B_{I\alpha} &= \sum_{l=2,4,\ldots}^{\infty}\sum_{m=1,3,\ldots}^{l}\frac{mC_{lm}}{\sin\theta}r^{-(l+2)}P_l^m(\cos\theta)\cos\alpha \end{aligned} \qquad (7)$$

where $C_{lm}$ is given by:

$$C_{lm} = - \mu_0 R_m^{l+2} M_{lm}/[(1 + l(1 + \mu_r)]$$

The torque exerted on the rotor, resulting from the interaction between the current in a stator winding and the rotor magnetic field, is given by:

$$T = - \int_V r \times (J \times B) d V \qquad (8)$$

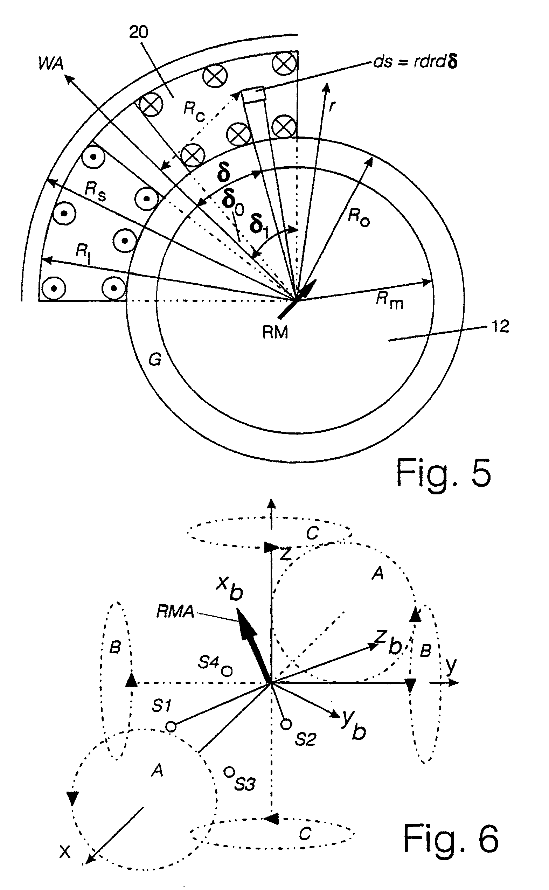

where $J$ denotes the current density vector in the winding region $V$. Each winding comprises a number of circular turns distributed on the spherical stator, and occupying an area bounded by $r=R_0, r=R_s$, and $\delta=\delta_0$, $\delta=\delta_1$, as shown in Figure 5. Considering a single turn with infinitesimal cross-section $ds = rdrd\delta$ and an enclosing circular contour $C$, the total torque produced by the winding may be obtained from the following integration:

$$T = - 2J \int_{R_0}^{R_1} \int_{\delta_0}^{\delta_1} \left\{ \oint_C r B_{lr}(r,\theta) dl \right\} rdrd\delta \qquad (9)$$

It can be shown that $B_{lr}$ is dominated by its fundamental component, viz. $l=2$, $m=1$. Therefore, the result of equation (9) neglecting high order harmonics, is given by:

$$T = \begin{bmatrix} T_x \\ T_y \\ T_z \end{bmatrix} = T_m \begin{bmatrix} v_y^2 - v_z^2 \\ -v_x v_y \\ v_x v_z \end{bmatrix} \qquad (10)$$

where $v = [v_x v_y v_z]^T$ is the direction cosines of the winding axis, and the torque magnitude, $T_m$, is given by:

$$T_m = 15\pi\sqrt{2}B_{rent}JR_m^4 \ln(R_s/R_0)(\sin^3 \delta_1 - \sin^3 \delta_0)/8(2\mu_r + 3)$$

As can be seen, $T_m$ is dependent upon $B_{rem}$ and $J$ as well as the geometrical parameters of the rotor and the winding. If the airgap between the rotor and winding is $G$, then for given $B_{rem}$ $J$, $\delta_0$, $\delta_1$ and $R_S$, $T_m$ is a function of $R_M/R_S$. This relation is plotted in Figure 4b assuming $B_{rem} = 1.2T$, $\mu_r = 1.15$, $J = 2.0A/mm2$, $\delta_0 = 5^0$, $\delta_1 = 30^0$, $G = 0.002m$ and $R_s = 0.042m$. It is evident that there exists an optimal ratio of $R_m/R_s$ viz. 0.738, that yields maximum torque.

The torque, $T_c$, produced by a pair of windings carrying current $i$ and having direction cosines $[v_{xy}v_z]^T$ and $[v'_x v'_y v'_z]^T$, respectively, is given by:

$$T_c = \begin{bmatrix} T_{cx} \\ T_{cy} \\ T_{cz} \end{bmatrix} = K_T i \begin{bmatrix} v_y^2 - v_z^2 + v'^2_y - v'^2_z \\ -v_x v_y - v'_x v'_y \\ v_x v_z + v'_x v'_z \end{bmatrix} \qquad (11)$$

where

$$K_T = T_m N/[J(R_S^2 - R_0^2)(\delta_1 - \delta_0)] \tag{12}$$

is defined as the winding torque constant, and $N$ is the number of turns for the winding pair. The total torque, $T_{em}$, produced by four sets of identical winding, A, B, C, and D, having direction cosines $[v_{xj} v_{yj} v_{zj}]^T$ and $[v'_{xj} v'_{yj} v'_{zj}]^T$ ($j$ = A, ..., D) is, therefore given by:

$$T_{em} = \sum_{j=A,...,D} T_{cj} = K_{TM} i \tag{13}$$

where $i = [i_A i_B i_C i_D]^T$ is the winding current vector, and $K_{TM}$, defined as the torque matrix of the actuator, is given by:

$$K_{TM} = K_T \begin{bmatrix} v_{yA}^2 - v_{zA}^2 + v'^2_{yA} - v'^2_{zA} & v_{yB}^2 - v_{zB}^2 + v'^2_{yB} - v'^2_{zB} \\ -v_{xA}v_{yA} - v'_{xA}v'_{yA} & -v_{xB}v_{yB} - v'_{xB}v'_{yB} \\ v_{xA}v_{zA} + v'_{xA}v'_{zA} & v_{xB}v_{zB} + v'_{xB}v'_{zB} \\ v_{yC}^2 - v_{zC}^2 + v'^2_{yC} - v'^2_{zC} & v_{yD}^2 - v_{zD}^2 + v'^2_{yD} - v'^2_{zD} \\ -v_{xC}v_{yC} - v'_{xC}v'_{yC} & -v_{xD}v_{yD} - v'_{xD}v'_{yD} \\ v_{xC}v_{zC} + v'_{xC}v'_{zC} & v_{xD}v_{zD} + v'_{xD}v'_{zD} \end{bmatrix} \tag{14}$$

It can be shown that the rank of $K_{TM}$ is three within the working envelope of the actuator, implying that the actuator is able to deliver motion in three degrees-of-freedom, viz. $\pm 45^0$ pan-tilt excursions and continuous rotation.

Three degrees of freedom would also be possible with only three sets of coils, instead of the four described herein. However, there may then be a risk that singularities may be encountered and perhaps only a narrower working envelope would be possible. On the other hand, five or more sets of coils are also possible, except that the overall specific torque of the motor with increasing number of coils will decrease. Therefore the described number of four coil sets is preferred. A similar discussion may be followed in relation to the number of pole pairs of the rotor magnet, although two, in this case is not only the minimum but is also the preferred number. With greater number of poles the magnetic fields tend to interact and cancel one another.

By a similar integration procedure, the flux-linkage of a pair of windings due to the rotor magnetic field is given by:

$$\Psi_w = K_E(v_y v_z + v'_y v'_z) \tag{15}$$

where $K_E$, defined as the back-emf constant of the winding pair, is identical to $K_T$. The back-emfs of four identical windings A, B, C, and D, therefore, are given by:

$$e_j = -K_T \frac{d}{dt}(v_{yj}v_{zj} + v'_{yj}v'_{zj}) \qquad j = A,...,D \tag{16}$$

For close loop control, it is necessary to have position feedback signals. In reference [6], which relates to a two-degrees-of-freedom motor, this is achieved by using two sensors, for example Hall effect or magnetoresistive sensors. However, in reference [7], referring to a similar two degree of freedom motor, the orientation of the rotor is represented by a set of Euler angles $\alpha\beta$, using four sensors positioned as shown in Figure 6. Sensors 1 and 2 are deployed symmetrically with respect to the $x$ axis on the $x$-$y$ plane, and sensors 3 and 4 are similarly deployed on the $x$-$z$ plane. The magnetic field which is measured by the sensors is the combination of the radial components produced by all the field sources, viz., the rotor magnet and the winding currents, $i_A$, $i_B$ and $i_C$, and the sensor outputs, $V_{sj}$ $j$ = 1, 2,...,4), may be written as:

$$V_{sj} = k(B_{mrj} + B_{Arj} + B_{Brj} + B_{Crj}) \qquad j = 1,2,...,4 \qquad (17)$$

where $k$ is the sensitivity, and $B_{mrj}$, $B_{Arj}$, $B_{Brj}$ and $B_{Crj}$ are the radial components of flux density at the sensor positions contributed by the rotor magnet and the currents in the windings A, B and C respectively. Due to the symmetry of the field and sensor system, equation (20) can be reduced to:

$$V_{sj} = kB_{mrj} + k_{sA}i_A + (-1)^j k_{sB}i_B \qquad j = 1,2$$

$$V_{sj} = kB_{mrj} + k_{sA}i_A + (-1)^j k_{sC}i_C \qquad j = 3,4 \qquad (18)$$

where $k_{sA}$, $k_{sB}$ and $k_{sC}$ are coefficients relating the sensor outputs to the winding currents $i_A$, $i_B$ and $i_C$. It is important to note that these coefficients are constant, and may be determined by either field computation or calibration. The component of output voltage, $V_{smj}$, contributed by the rotor magnet is given by:

$$V_{smj} = kB_{r0} \cos \theta_{sj} \qquad (19)$$

where $B_{r0}$ is a constant related to the rotor magnetic field distribution and $\theta_{sj}$ is the angle between the $X_b$ axis (rotor magnetisation axis) and the $j^{th}$ sensor position vector. If the rotor is displaced, from the initial orientation, by rotating it about the $y_b$ axis by an angle $\beta$ and about the $z_b$ axis by an angle $\alpha$, the resulting $\cos\theta_{sj}$ is given by:

$$\cos\theta_{sj} = \cos\alpha_0 c\beta c\alpha + (-1)^j \sin\alpha_0 s\alpha \qquad j=1,2$$

$$\cos\theta_{sj} = \cos\alpha_0 c\beta c\alpha + (-1)^{j-1} \sin\alpha_0 s\beta c\alpha \qquad j=3,4 \qquad (20)$$

Combining equations (18)-(20) and solving for $\alpha$ and $\beta$ yields:

$$\alpha = \sin^{-1}\left[\frac{V_{s2} - V_{s1} - 2k_{sB}\, i_B}{2kB_{ro} \sin \alpha_0}\right] \; ; \beta = \sin^{-1}\left[\frac{V_{s3} - V_{s4} - 2k_{sC}i_C}{2kB_{r0} \sin \alpha_0 \cos \alpha}\right] \qquad (21)$$

In equation (21), the sensor outputs are utilised differentially, which improves the noise rejection property of the position sensing system. The fact that $\alpha$ and $\beta$ are dependent upon $kB_{r0}\sin\alpha_0$ requires some attention since, in general, both $k$ and $B_{r0}$, which is proportional to the remanence of the rotor magnet, will vary if the ambient temperature changes. However, this problem may be circumvented by performing an auto-calibration procedure prior to normal operation.

A complete dynamic model for the two-degrees-of-freedom actuator of reference [6] is given by:

$$\begin{cases} M\ddot{Q}_E + C\dot{Q}_E + G + \tau_{fE} = K_{ET}i_w \\ Li_w + Ri_w - K_{ET}^T\dot{Q}_E = u_E \end{cases} \qquad (22)$$

where $Q_E = [\beta\alpha]^T$ are the Euler angles representing the rotor orientation, the inertia matrix $M$, the Coriolis and centripetal force matrix $C$, and the gravitational torque vector $G$ being given by:

$$M = I_b \begin{bmatrix} (c\alpha)^2 & 0 \\ 0 & 1 \end{bmatrix}; \quad C = I_b c\alpha s\alpha \begin{bmatrix} -\dot\alpha & -\dot\beta \\ \dot\beta & 0 \end{bmatrix}; \quad G = r_c m_c g \begin{bmatrix} -c\beta c\alpha \\ s\beta s\alpha \end{bmatrix}$$

where a shorthand notation for sine and cosine functions is used for clarity, that is, $s\alpha$ represents $\sin\alpha$. $I_b$ is the combined moment of inertia of the rotor and payload referred in the rotor co-ordinate system, $\mathbf{u}_\varepsilon = [u_A u_B u_C]^T$ is the winding terminal voltage vector, $i_w = [i_A i_B i_C]$ is the winding current *vector, L* = diag $[L_A L_B L_C]^T$ is the diagonal winding self-inductance matrix, $\mathbf{R}$ = diag $[R_A R_B R_C]^T$ is the diagonal winding resistance matrix, $\tau_{\mathbf{fE}}$ is the vector representing the Coulomb and viscous friction, and $K_{ET}$, defined as the actuator torque matrix, is related to the actuator torque constant $K_T$ by:

$$K_{ET} = K_T \begin{bmatrix} -s\beta c\alpha & 0 & -c\beta c\alpha \\ -c\beta s\alpha & c\alpha & s\beta s\alpha \end{bmatrix} \qquad (23)$$

Note that equation (22) has a singularity at $\alpha = 90°$. However, with the actuator design in reference [6] the angular excursion of $\alpha$ is within $\pm 45°$, and this singular point will never be encountered. Also, it will be noted that in non-singular regions, equation (22) constitutes a Hamiltonian system, and, therefore, possesses a well-understood structure and similar important properties as the dynamic equations for robotic manipulators (reference[8]). As a result, any advanced control law for the control of robotic manipulators can be applied to the spherical actuator.

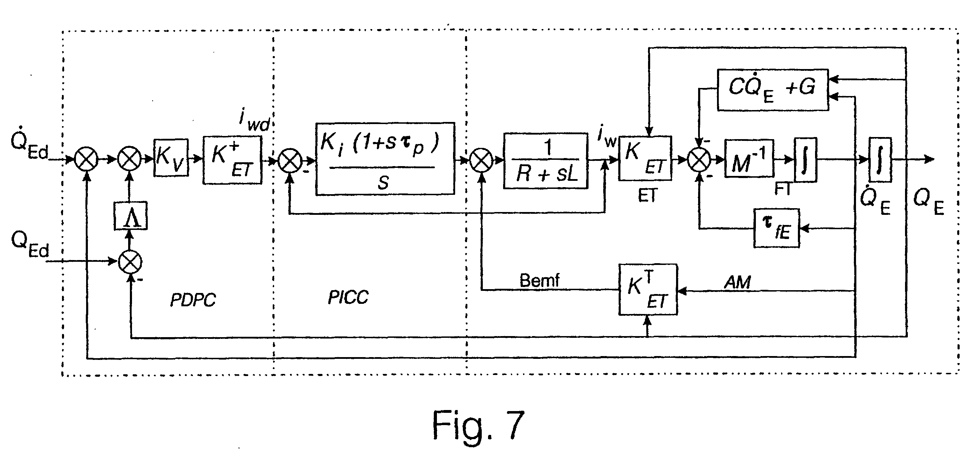

As an example, a robust outer PD position control law as described in reference [9] in conjunction with an inner PI current control law, as shown in Figure 7, is utilised for the control of the spherical actuator. The role of the inner current tracking loop is to minimise the effects of the back-emnf and current transients on the outer position servo loop, so that a robust design philosophy, espoused in reference [9], can be used to determine the control gain matrices $K_v$ and $\Lambda$. The output of the position controller is two independent torque demands, but equation (22) has three independent control inputs. The extra degree of freedom in the control variables suggests that there exists a redundant control input which may be used for optimal control, eg to minimise the total energy consumption for a given torque demand. This control strategy is implemented by taking the weighted pseudo inverse of $K_{ET}$, as denoted by $K^+_{ET}$ in Figure 7.

With the three-degrees-of-freedom motor of the present invention, a similar position sensing and control regime is within the ambit of the man skilled in the art except that further sensors will be required to detect the rotational position of the rotor, in addition to its position in relation to pan and tilt angles.

## REFERENCES

1. K Davey, G Vachtsevanos and R Powers "The analysis of fields and torques in spherical induction motors" *IEEE Trans. on Magn* vol. 23, pp 273-282, 1987.

2. K Lee and C Kwan "Design concept development of a spherical stepper for robotic applications" *IEEE Trans on Robot* Automat vol 7 pp 175-181, 1991.

3. B Bederson, R Wallace and E Schwartz "A miniature pan-tilt actuator: the spherical pointing motor" *IEEE Trans on Robot Automat* vol 10 pp 298-308, 1994.

4. K Lee, J Pei and R Roth "Kinematic analysis of a three degree of freedom spherical wrist actuator", Mechatronics, Vol 4 pp 581-605, 1994.

5. J Wang, G W Jewell and D Howe "Analysis, design and control of a novel spherical permanent magnet actuator" *IEEE Proc Electr Power Appl* in press, 1997.

6. J Wang, G W Jewell and D Howe "Modelling of a novel spherical permanent magnet actuator" *Proc of IEEE Inter conf on Robotics* and *Automation* New Mexico, USA 1190-1195, 1997.

7. J Wang, G W Jewell and D Howe "Development of a novel spherical permanent magnet actuator" *IEEE Colloquium on new topologies for PM machines* London June 1997 pp 8.1-10.

8. F L Lewis, C T Abdallah and D M Dawson "Control of robotic manipulators", Macmillan Publishing Company, 1993.

9. J Wang, S J Dodds and W N Bailey "Guaranteed rates of convergence of a class of PD controllers for trajectory tracking problems of robotic manipulators with dynamic uncertainties", *IEE Proc.-Control Theory Appl.*, 1996 **143** (2), pp 186-190

**GLOSSARY**

**List of principal symbols used in this specification**

| | |
|---|---|
| $B$ | = magnetic flux density, T |
| $B_{rem}$ | = remanence, T |
| $G$ | = airgap length, m |
| $H$ | = magnetic field strength, A/m |
| $i_w$ | = winding current vector, A |
| $J_w$ | = winding current density, A/m$^2$ |
| $K_T$ | = torque constant, N·m/A |
| $K_E$ | = back-emf constant, V·s/rad |
| $L$ | = inductance matrix, H |
| $M_0$ | = remanent magnetisation, A/m |
| $R$ | = resistance matrix, $\Omega$ |
| $R_s$ | = stator radius, m |
| $R_m$ | = rotor radius, m |
| $s$ | = Laplace operator, s$^{-1}$ |
| $T, \tau$ | = torque, N·m |
| $u_E$ | = winding terminal voltage vector, V |
| $\alpha, \beta, \Phi$ | = Euler angles, rad |
| $\varphi$ | = scalar magnetic potential, A |
| $\Psi_w$ | = winding flux-linkage, Wb |
| $\mu_0$ | = permeability of free space, H/m |
| $\mu_r$ | = relative recoil permeability |
| $\omega$ | = angular velocity, rad/s |

**Key to symbols used in Drawings**

| | |
|---|---|
| WA | = Winding Axis |
| RM | = Rotor Magnet |
| A,B,C | = Winding A,B,C |
| RMA | = Rotor Magnetization Axis |
| S1...S4 | = Sensor 1...4 |
| PDPC | = PD Position Controller |
| PICC | = PI Current Controller |
| Bemf | = Back emf |
| ET | = effective Torque |
| FT | = Friction Torque |

AM    = Actuator Model

**Claims**

1.  A motor (10) comprising a permanent magnet spherical rotor (12) mounted for rotation about three orthogonal axes (x,y,z) in a stator (16) comprising coils (20) adapted to induce magnetic fields through the rotor to rotate the rotor, said rotor comprising a composite magnet having at least two pole pairs, and comprising at least four segments (26) of a sphere, each segment being magnetised so that the curved surface of the segment has substantially only one polarity, **characterised in that** the segments are parallel magnetised, and, in relation to that radius of curvature which bisects each segment both transversely and longitudinally of the segment, the magnetisation (28) lies parallel to that radius.

2.  A motor as claimed in claim 1, wherein the stator comprises four sets of coils (A,B,C,D), each set preferably arranged as a pair (A-A', B-B', C-C', D-D') of two electrically interconnected coils.

3.  A motor as claimed in any preceding claim, wherein the stator has an access aperture (22) and the rotor has a payload arm (14) extending through the aperture, which aperture permits substantially ±45° pan and tilt rotation of the rotor arm and unrestricted rotation of the rotor arm about its own axis.

4.  A motor as claimed in claim 3, wherein the straight edges of adjacent segments are coincident with the rotor arm axis.

5.  A motor as claimed in claim 4 wherein there are four segments only, each a quarter sphere.

6.  A motor (10) comprising a permanent magnet spherical rotor (12) mounted for rotation about three orthogonal axes (x,y,z) in a stator (16) having an access aperture (22) and comprising coils(20)adapted to induce magnetic fields through the rotor to rotate the rotor, said rotor comprising a composite magnet having at least two pole pairs, **characterised in that** the stator coils comprise at least four rim coils (A,B,C,D) arranged with their centres lying substantially on a rim plane parallel said aperture, and a corresponding number of base coils (A',B',C',D') arranged with their centres on a base plane, parallel said rim plane and disposed remote from said aperture, opposing pairs (A-A',B-B',C-C',D-D') of said rim and base coils being electrically interconnected.

7.  A motor as claimed in claim 6, wherein the base coils are rotationally offset with respect to the rim coils.

8.  A motor as claimed in claim 6 or 7, wherein there are four sets of coils only.

9.  A motor as claimed in claim 6, 7 or 8, also having the features of any of claims 1 to 5.

10. A motor as claimed in any preceding claim, wherein the stator is surrounded by a spherical, ferro-magnetic shell, so as to increase magnetic coupling between the respective fields.

11. A motor as claimed in any preceding claim, wherein the rotor has a hollow centre or an iron core, the segments being shaped accordingly.

12. A motor(10)comprising a permanent magnet spherical rotor (12) mounted for rotation about three orthogonal axes (x,y,z) in a stator (16) comprising coils (20) adapted to induce magnetic fields through the rotor to rotate the rotor, **characterised in that** the flux density created by the rotor in the regions of the coils is, in a spherical co-ordinate system, given by the following expressions:

$$B_{Ir} = \sum_{l=2,4,\ldots}^{\infty} \sum_{m=1,3,\ldots}^{l} C_{lm}(l+1)r^{-(l+2)}P_l^m(\cos\theta)\sin\alpha$$

$$B_{I\theta} = \sum_{l=2,4,\ldots}^{\infty} \sum_{m=1,3,\ldots}^{l} C_{lm} \, r^{-(l+2)} \frac{d}{d\theta} P_l^m (\cos\theta) \sin\alpha$$

$$B_{I\alpha} = \sum_{l=2,4,\ldots}^{\infty} \cdot \sum_{m=1,3,\ldots}^{l} \frac{m \, C_{lm}}{\sin\theta} r^{-(l+2)} P_l^m (\cos\theta) \cos\alpha$$

wherein:

$B_{I(\cdot)}$ is the magnetic flux density vector in Tesla for components $r$(radius, in metres) and $\theta$ and $\alpha$ (angles, in radians) of the spherical co-ordinate system; and
$P_l^m(\cdot)$is the associated Legrendre polynomial of degree $l$ and order $m;$ and

where $C_{lm}$ is given by:

$$C_{lm} = -\mu_0 R_m^{l+2} M_{lm}/[(1 + l(1 + \mu_r)],$$

wherein

$\mu_0$ is the permeability of free space in Henrys per metre;
$\mu_r$ is the relative recoil permeability; and
$R_m$ is the rotor radius in metres; and

where $M_{lm}$ is given by:

$$M_{lm} = \frac{4(2l+1)(l-m)!}{\pi m(l+m)!} M_c \int_0^1 P_l^m (x) \, x \, dx \quad ;$$

and
where $M_c$ is given by:

$$M_c = B_{rem}/\mu_0 \sqrt{2},$$

wherein
$B_{rem}$ is the remanence in Tesla of the rotor material.

13. A motor as claimed in claim 12, wherein the torque magnitude of the motor is optimised by arranging the coils so that the following expression is true:

$$T_m = 15\pi\sqrt{2}B_{rem}JR_m^4 \ln(R_s/R_0)(\sin^3\delta_1 - \sin^3 \delta_0)/8(2\mu_r + 3),$$

wherein

$T_m$ is the torque magnitude in Newtons metres;
$B_{rem}$ is the remanence in Tesla of the rotor material; $J$ is the current density vector in the winding region, in Amps per square metre;

$R_m$ is the rotor radius in metres;
$R_s$ is the stator outside radius in metres;
$R_o$ is the stator inside radius in metres;
$\delta_1$ and $\delta_0$ are the stator coil angles in radians; and
$\mu_r$ is the relative recoil permeability.

14. A robotic manipulator, an infrared or laser tracking system, a remote camera manipulation device, or a joystick with force feedback, comprising a motor as claimed in any preceding claim.

**Patentansprüche**

1. Motor (10) mit einem Permanentmagnet-Kugelrotor (12), der zur Drehung um drei orthogonale Achsen (x,y,z) in einem Stator (16) montiert ist, der Spulen (20) aufweist, die angepaßt sind, um durch den Rotor verlaufende magnetische Felder zu induzieren, um den Rotor zu drehen, wobei der Rotor einen zusammengesetzten Magneten mit mindestens zwei Polpaaren umfaßt und mindestens vier Segmente (26) einer Kugel aufweist, wobei jedes Segment so magnetisiert ist, daß die gekrümmte Oberfläche des Segmentes im wesentlichen nur eine Polarität hat, **dadurch gekennzeichnet, daß** die Segmente parallel magnetisiert sind und die Magnetisierung (28) in Bezug auf den Krümmungsradius, der jedes Segment sowohl in Querrichtung als auch in Längsrichtung des Segmentes halbiert, parallel zu diesem Radius liegt.

2. Motor nach Anspruch 1, wobei der Stator vier Sätze von Spulen (A,B,C,D) umfaßt, wobei jeder Satz bevorzugt als ein Paar (A-A', B-B', C-C', D-D') zweier elektrisch untereinander verbundener Spulen ausgestaltet ist.

3. Motor nach einem der vorhergehenden Ansprüche, wobei der Stator eine Zugangsöffnung (22) aufweist und der Rotor einen Nutzlastarm (14) aufweist, der durch die Öffnung verläuft,
wobei die Öffnung im wesentlichen eine Schwenk- und Neigedrehung des Rotorarmes um $\pm 45°$ und eine uneingeschränkte Drehung des Rotorarmes um seine eigene Achse zuläßt.

4. Motor nach Anspruch 3, wobei die geraden Ränder unmittelbar benachbarter Segmente mit der Rotorarm-Achse zusammenfallen.

5. Motor nach Anspruch 4, wobei es nur vier Segmente gibt, von denen jedes eine Viertelkugel ist.

6. Motor (10) mit einem Permanentmagnet-Kugelrotor (12), der zur Drehung um drei orthogonale Achsen (x,y,z) in einem Stator (16) montiert ist, der eine Zugangsöffnung (22) hat und Spulen (20) aufweist, die angepaßt sind, um magnetische Felder durch den Rotor zu induzieren, um den Rotor zu drehen, wobei der Rotor einen zusammengesetzten Magneten mit mindestens zwei Polpaaren umfaßt, **dadurch gekennzeichnet, daß** die Statorspulen mindestens vier Randspulen (A,B,C,D), die mit ihren Zentren im wesentlichen auf einer zu der Öffnung parallelen Randebene liegend angeordnet sind, und eine entsprechende Anzahl von Basisspulen (A',B',C',D') aufweist, die mit ihren Zentren auf einer Basisebene angeordnet sind, die parallel zu der Randebene und von der Öffnung entfernt angeordnet ist, wobei gegenüberliegende Paare (A-A',B-B',C-C',D-D') der Rand- und Basisspulen elektrisch untereinander verbunden sind.

7. Motor nach Anspruch 6, wobei die Basisspulen in Bezug auf die Randspulen in Drehrichtung versetzt sind.

8. Motor nach Anspruch 6 oder 7, wobei es nur vier Sätze von Spulen gibt.

9. Motor nach Anspruch 6, 7 oder 8, der auch die Merkmale von irgendeinem der Ansprüche 1 bis 5 aufweist.

10. Motor nach einem der vorhergehenden Ansprüche, wobei der Stator von einem kugelförmigen, ferromagnetischen Gehäuse umgeben ist, um eine magnetische Kopplung zwischen den jeweiligen Feldern zu erhöhen.

11. Motor nach einem der vorhergehenden Ansprüche, wobei der Rotor ein hohles Zentrum oder einen Eisenkern aufweist und die Segmente entsprechend geformt sind.

12. Motor (10) mit einem Permanentmagnet-Kugelrotor (12), der zur Drehung um drei orthogonale Achsen (x,y,z) in einem Stator (16) montiert ist, der Spulen (20) aufweist, die angepaßt sind, um magnetische Felder durch den Rotor zu induzieren, um den Rotor zu drehen, **dadurch gekennzeichnet, daß** die durch den Rotor in den Bereichen der Spulen erzeugte Flußdichte in einem sphärischen Koordinatensystem durch die folgenden Ausdrücke gegeben ist:

$$B_{lr} = \sum_{l=2,4,\ldots}^{\infty} \sum_{m=1,3,\ldots}^{l} C_{lm} (l+1) \ r^{-(l+2)} \ P_l^m(\cos \theta) \ \sin \alpha$$

$$B_{l\theta} = \sum_{l=2,4,\ldots}^{\infty} \sum_{m=1,3,\ldots}^{l} C_{lm} \ r^{-(l+2)} \ \frac{d}{d\theta} \ P_l^m(\cos \theta) \ \sin \alpha$$

$$B_{l\alpha} = \sum_{l=2,4,\ldots}^{\infty} \sum_{m=1,3,\ldots}^{l} \frac{m \ C_{lm}}{\sin \theta} \ r^{-(l+2)} \ P_l^m(\cos \theta) \ \cos \alpha$$

wobei:

$B_{l(.)}$ der Vektor der magnetischen Flußdichte in Tesla für die Komponenten $r$ (Radius, in Metern) und $\theta$ und $\alpha$ (Winkel, in Radiant) des sphärischen Koordinatensystems ist; und
$P_l^m(.)$ das zugeordnete Legendre-Polynom vom Grad $l$ und der Ordnung $m$ ist; und

wobei $C_{lm}$ gegeben ist durch:

$$C_{lm} = \mu_0 \ R_m^{l+2} \ M_{lm} \ / \ [(1 + l(1 + \mu_r)]$$

wobei

$\mu_0$ die Permeabilität des freien Raumes in Henry pro Meter ist;
$\mu_r$ die relative permanente Permeabilität ist; und
$R_m$ der Rotorradius in Metern ist; und

wobei $M_{lm}$ gegeben ist durch:

$$M_{lm} = \frac{4 (2l + 1) (l - m)!}{\pi \ m \ (l + m)!} \ M_c \int_0^1 P_l^m(x) \ x \ dx \ ;$$

und wobei $M_c$ gegeben ist durch:

$$M_c = B_{rem} \ / \ \mu_0 \ \sqrt{2} \ ,$$

wobei
$B_{rem}$ die Remanenz des Rotormaterials in Tesla ist.

**13.** Motor nach Anspruch 12, wobei die Drehmomentgröße des Motors optimiert ist, indem die Spulen so angeordnet sind, daß der folgende Ausdruck wahr ist:

$$T_m = 15\pi\sqrt{2}B_{rem}JR_m^4\ln(R_s / R_0)(\sin^3 \delta_1 - \sin^3 \delta_0) / 8 (2\mu_r + 3) ,$$

$T_m$ der Drehmomentbetrag in Newtonmetern ist;
$B_{rem}$ die Remanenz des Rotormaterials in Tesla ist;
$J$ der Stromdichte-Vektor im Spulenbereich in Ampere pro Quadratmetern ist;
$R_m$ der Rotorradius in Metern ist;
$R_s$ der Stator-Außenradius in Metern ist;
$R_o$ der Stator-Innenradius in Metern ist;
$\delta_1$ und $\delta_0$ die Statorspulen-Winkel in Radiant sind; und
$\mu_r$ die relative permanente Permeabilität ist.

**14.** Roboter-Manipulator, Infrarot- oder Laser-Nachführungssystem, Fern-Handhabungsvorrichtung für eine Kamera oder Steuerhebel mit Kraft-Rückkopplung mit einem Motor nach einem der vorhergehenden Ansprüche.

## Revendications

**1.** Moteur (10) comprenant un rotor sphérique à aimant permanent (12) monté de façon à tourner autour de trois axes orthogonaux (x, y, z) dans un stator (16) comprenant des bobines (20) adaptées pour induire des champs magnétiques à travers le rotor afin de faire tourner le rotor, ledit rotor comprenant un aimant composite ayant au moins deux paires de pôles, et comprenant au moins quatre segments (26) d'une sphère, chaque segment étant magnétisé de telle sorte que la surface incurvée du segment n'ait sensiblement qu'une seule polarité, **caractérisé en ce que** les segments sont magnétisés parallèlement et, par rapport au rayon de courbure qui coupe chaque segment à la fois transversalement et longitudinalement du segment, la magnétisation (28) est parallèle à ce rayon.

**2.** Moteur selon la revendication 1, dans lequel le stator comprend quatre ensembles de bobines (A, B, C, D), chaque ensemble étant de préférence agencé sous forme de paire (A-A', B-B', C-C', D-D') de deux bobines électriquement interconnectées.

**3.** Moteur selon l'une quelconque des revendications précédentes, dans lequel le stator présente une ouverture d'accès (22) et le rotor possède un bras de charge (14) s'étendant à travers l'ouverture, laquelle ouverture permet une rotation horizontale et verticale sur sensiblement ±45° du bras de rotor et une rotation illimitée du bras de rotor autour de son propre axe.

**4.** Moteur selon la revendication 3, dans lequel les bords droits de segments adjacents sont coïncidents avec l'axe du bras de rotor.

**5.** Moteur selon la revendication 4, dans lequel il n'y a que quatre segments, chacun d'un quart de sphère.

**6.** Moteur (10) comprenant un rotor sphérique à aimant permanent (12) monté de façon à tourner autour de trois axes orthogonaux (x, y, z) dans un stator (16) ayant une ouverture d'accès (22) et comprenant des bobines (20) adaptées pour induire des champs magnétiques à travers le rotor afin de faire tourner le rotor, ledit rotor comprenant un aimant composite ayant au moins deux paires de pôles, **caractérisé en ce que** les bobines de stator comprennent au moins quatre bobines de rebord (A, B, C, D) agencées avec leurs centres situés sensiblement sur un plan de rebord parallèle à ladite ouverture, et un nombre correspondant de bobines de base (A', B', C', D') agencées avec leurs centres sur un plan de base, parallèlement audit plan de rebord et disposés à distance de ladite ouverture, des paires opposées (A-A', B-B', C-C', D-D') desdites bobines de rebord et de base étant électriquement interconnectées.

**7.** Moteur selon la revendication 6, dans lequel les bobines de base sont décalées en rotation par rapport aux bobines de rebord.

**8.** Moteur selon la revendication 6 ou 7, dans lequel il n'existe que quatre ensembles de bobines.

**9.** Moteur selon la revendication 6, 7 ou 8, ayant également les caractéristiques de l'une quelconque des revendications 1 à 5.

**10.** Moteur selon l'une quelconque des revendications précédentes, dans lequel le stator est entouré par une enveloppe sphérique ferromagnétique, afin d'augmenter l'accouplement magnétique entre les champs respectifs.

**11.** Moteur selon l'une quelconque des revendications précédentes, dans lequel le rotor possède un centre creux ou un noyau ferreux, les segments étant formés de manière correspondante.

**12.** Moteur (10) comprenant un rotor sphérique à aimant permanent (12) monté de façon à tourner autour de trois axes orthogonaux (x, y, z) dans un stator (16) comprenant des bobines (20) adaptées pour induire des champs magnétiques à travers le rotor afin de faire tourner le rotor, **caractérisé en ce que** la densité de flux créée par le rotor dans les régions des bobines est, dans un système coordonné sphérique, donnée par les expressions suivantes :

$$B_{Ir} = \sum_{l=2,4,\dots} \sum_{m=1,3,\dots}^{l} C_{lm}(l+1)r^{-(l+2)}P_l^m(\cos\theta)\sin\alpha$$

$$B_{I\theta} = \sum_{l=2,4,\dots}^{\infty} \sum_{m=1,3,\dots}^{l} C_{lm}r^{-(l+2)}\frac{d}{d\theta}P_l^m(\cos\theta)\sin\alpha$$

$$B_{I\alpha} = \sum_{l=2,4,\dots}^{\infty} \sum_{m=1,3,\dots}^{l} \frac{mC_{lm}}{\sin\theta}r^{-(l+2)}P_l^m(\cos\theta)\cos\alpha$$

dans lesquelles :

$B_{I(-)}$ est le vecteur de densité de flux magnétique en Teslas pour les composantes r (rayon, en mètres) et $\theta$ et $\alpha$ (angles, en radians) du système coordonné sphérique ; et
$P_l^m(-)$ est le polynôme de Legendre associé de degré 1 et d'ordre m ; et

où $C_{lm}$ est donné par :

$$C_{lm} = -\mu_0 R_m^{l+2} M_{lm} / [(1 + l(1 + \mu_r)];$$

dans laquelle

$\mu_0$ est la perméabilité de l'espace libre en Henrys par mètre ;
$\mu_r$ est la perméabilité de recul relative ; et
$R_m$ est le rayon du rotor en mètres ; et

où $M_{lm}$ est donné par :

$$M_{lm} = \frac{4(2l+1)(l-m)!}{\pi m(l+m)!} M_c \int_0^1 P_l^m(x)\, x\, dx \qquad ;$$

et
où $M_c$ est donné par :

$$M_c = B_{rem}/\mu_0 \sqrt{2},$$

dans laquelle
$B_{rem}$ est la rémanence en Teslas du matériau de rotor.

13. Moteur selon la revendication 12, dans lequel l'amplitude de couple du moteur est optimisée en agençant les bobines de telle sorte que l'expression suivante soit exacte :--

$$T_m = 15\pi\sqrt{2}B_{rem}JR_m^4 \ln(R_{s--}/R_0)(\sin^3 \delta_1 - \sin^3\delta_0)/8(2\mu_r + 3),$$

dans laquelle

$T_m$ est l'amplitude du couple en Newtons-mètres ;
$B_{rem}$ est la rémanence en Teslas du matériau de rotor ;
J est le vecteur de densité de courant dans la région d'enroulement, en Ampères par mètre carré ;
$R_m$ est le rayon du rotor en mètres ;
$R_s$ est le rayon extérieur du stator en mètres ;
$K_o$ est le rayon intérieur du stator en mètres ;
$\delta_1$ et $\delta_0$ sont les angles de la bobine de stator en radians ; et
$\mu_r$ est la perméabilité de recul relative.

14. Manipulateur robotisé, système de suivi à infrarouge ou laser, dispositif de manipulation de caméra télécommandé, ou manette avec rappel de force comprenant un moteur selon l'une quelconque des revendications précédentes.

Fig. 1a

Fig. 1b

Fig. 2a

Fig. 3

Fig. 2b

Fig. 4b

Fig. 4a

Fig. 5

Fig. 6

Fig. 7

EP 1 023 762 B1

Fig. 8

Fig. 9

Fig. 10

Fig. 11a

Fig. 11c

Fig. 11b

Fig. 11d

Fig. 11e